# EUROPEAN PATENT SPECIFICATION

(11) **EP 1 468 967 B1**
(45) Date of publication and mention of the grant of the patent: **23.05.2007**
(21) Application number: 04425212.0
(22) Date of filing: 25.03.2004
(51) Int. Cl.: C02F 1/50, A61L 2/18, A61L 2/24, A61C 1/00

(54) **Method for sterilising and sanitising water circuits.**
Verfahren zur Desinfektion bzw. Sterilisation von Wasserkreisläufen.
Procédé de stérilisation et d'aseptisation de circuits d'eau.

(30) Priority: 11.04.2003 IT BO20030216
(43) Date of publication of application: 20.10.2004
(73) Proprietor: CASTELLINI S.p.A., I-40013 Castel Maggiore (Bologna) (IT)
(72) Inventor: Castellini, Franco, 40124 Bologna (IT)
(74) Representative: Lanzoni, Luciano

(56) References cited:
- EP-A- 1 161 959
- EP-A- 1 195 145

## Description

The present invention relates to a method for sterilising and sanitising water circuits, especially the water circuits of dental units.

In current dental equipment it is now routine practice for the water system, which supplies the fluids used by the equipment and by patients (water or physiological saline for tumblers and handpieces), or by consumer units (swilling water for the spittoon), to be subjected to disinfection and sterilising treatment to maintain the sterility of the system, especially inside the fluid conduits, both during and between patient treatment sessions.

In recent years, with increases in general standards of hygiene and with dental apparatus and equipment becoming more and more "fragile", many improvements have been made not only to the products used for these sterilising treatments but also to the internal structures of the dental equipment.

At a constructional level, the basic structure of the water circuit of a dental unit typically comprises a first main line supplying water from the mains to a plurality of branches or circuit legs leading to the operating and accessory equipment of the dental unit. Several systems, based on varied methods differing also according to purpose, have been designed in order to improve the functioning and disinfection of the water circuits. At present, there are essentially two different disinfection methods or philosophies, one based on a continuous cycle and the other on a discontinuous cycle, and both requiring additional devices to be fitted to the basic structure of the water circuit of the dental unit: in the solution proposed by patents DE-3.028.550 and DE-3.611.329, the dental equipment comprises a disinfectant liquid container connected to a unit for dosing the disinfectant liquid into the conduits that supply fluid to the different parts of the dental unit in such a way as to provide the system with disinfected water according to the amount of water required by each different part of the equipment.

On the other hand, in the solutions based on the discontinuous disinfection/sterilisation cycle, as disclosed in patent publications EP-111.249 and EP-111.249 and EP-317.521 (the latter being by the present Applicant), the mains water supply is shut off, and a dedicated branch equipped with an independent tank is used to introduce sterilising liquid into the conduits that supply water to the handpieces. After a preset time, depending on the quality of disinfection/sterilisation required and the properties of the sterilising liquid, the circuit is opened again and the sterilising liquid drained out.

Up to now, these two different methods, namely continuous and discontinuous, have been applied to dental units using not only the same basic structure but also the same products.

More specifically, in the container connecting conduit assembly used for the discontinuous treatment, the same product is used at lower doses mixed with water and used for the continuous disinfection treatment in order to avoid risks to the patient. The dose is measured by an adjustable dosing unit usually located on the circuit branch connecting the container to the main user branch.

Treatment carried out in this way, however, may lead to an insufficient level of sterility being reached in the water circuit. Indeed, the Applicant has conducted extensive research and tests showing that, after some time, this type of treatment loses its biocidal action inside the water circuit and, worse still, may in some cases lead to bacterial resistance (that is to say, the emergence of bacteria resistant to disinfection).

The resistant bacteria spreads rapidly through the system, making the continuous treatment useless, or even harmful, and having negative effects also on the discontinuous sanitising treatments.

The present invention therefore has for an aim to overcome the above mentioned drawbacks by providing a method for sterilising and sanitising water circuits, especially the water circuits of dental units, and offering high disinfection capabilities such as to maximise hygiene and create a high level of sterility in the water circuits.

In accordance with the invention, this aim is achieved by a method for sterilising and sanitising water circuits, especially the water circuits of dental units, as described in claim 1.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a diagram representing the water circuit of a dental unit equipped with the apparatus according to the present invention for sterilising and sanitising water circuits;
- Figure 2 shows another embodiment of the apparatus of Figure 1 in a view that is scaled up compared to that of Figure 1 and with some parts cut away in order to better illustrate others.

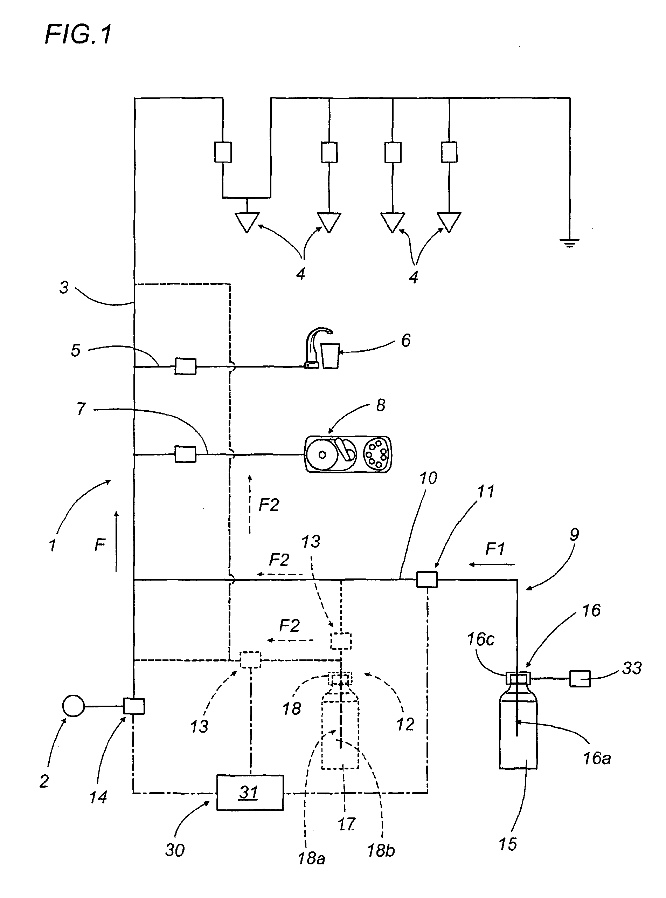

With reference to the accompanying drawings, and in particular Figure 1, a method according to the invention is used for sterilising and sanitising water circuits, especially the water circuits of dental equipment such as customary dental units, comprising essentially, and only insofar as concerns the parts relevant to this specification, a line 1 for supplying a user fluid, usually mains water, indicated by the arrow F, and connected at one end to a mains water supply 2 and at the other end to the dental unit through a first branch 3 for supplying a series of devices comprising at least a plurality of handpieces 4 (not illustrated in detail since they are of very well known type).

Figure 1 also shows a conduit 5 for supplying a tumbler 6, and a second branch 7 for supplying consumer equipment 8(such as a spittoon).

In a simple embodiment, the apparatus (see Figure 1 again) comprises at least one first unit 9, equipped with a third independent branch 10 connected at least to the first branch 3 and alternatively containing one of the following:
- a first disinfectant/sterilising fluid F1 to be supplied at least to the first branch 3 to permit performance of programmable discontinuous sterilising or sanitising cycles in the first branch 3; or
- a second sterile, disinfectant or medicinal fluid F2 to be supplied continuously to the first supply branch 3 independently of, and as an alternative for, the user fluid F from the supply line 1.

For controlling the type of fluid to be supplied to the first branch 3 according to the fluid F1 or F2 present, control means 30 are provided for selecting the supply of the first or second fluid F1 or F2 according to the operating configuration of the dental equipment: that is to say, a continuous steady-state supply of the first branch 3 or sterilisation / disinfection cycles of the first branch 3.

In the configuration just described, the first supply unit 9 may comprise at least one first container 15 for holding the first or the second fluid F1 or F2, and first means 16 for extracting the first or the second fluid F1 or F2 and introducing it into the third branch 10.

Preferably, the first and second fluids F1 and F2 are contained in interchangeable independent first containers 15 at the first extraction means 16.

For this reason, and for added safety, the first unit 9 may include means 33 for detecting the product, acting also on the above mentioned control means 30 so as to activate a continuous supply cycle when the second fluid F2 is detected and discontinuous sterilisation or sanitisation cycle when the first fluid F1 is detected.

The means 33 may be of any suitable kind such as, for example, means for detecting the pH of the fluid, optical means for detecting the colour of the fluid, a bar code reader, means for volumetrically checking the fluid, and so on.

In Figure 1, the means 33 are schematically illustrated as a plain block near the first unit 9.

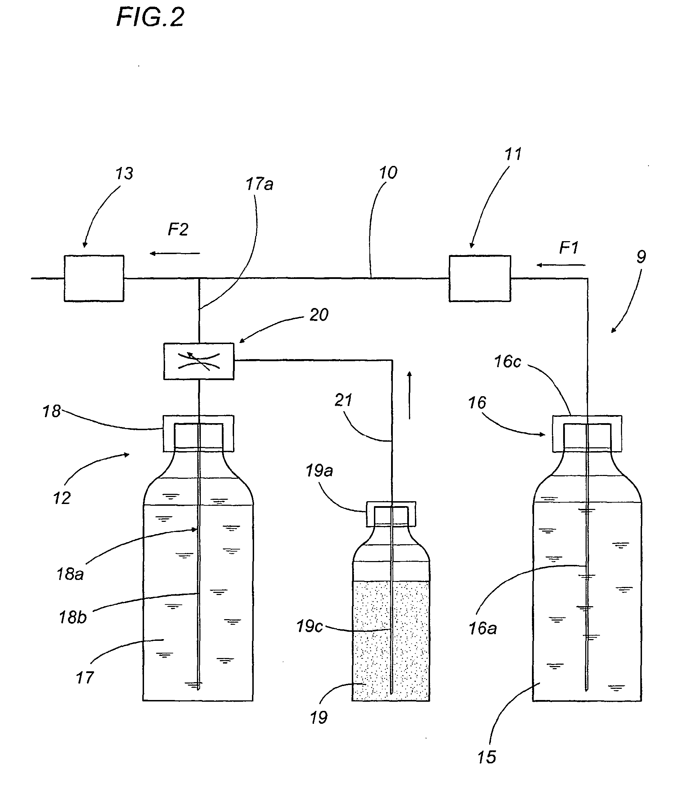

In another embodiment illustrated by the dashed line in Figure 1 and in more detail in Figure 2, the apparatus according the invention comprises:
- a first unit 9 containing the first disinfectant/sterilising fluid F1 connected to a third independent branch 10 for supplying the first fluid F1 to the first branch 3 to permit performance of programmable discontinuous sterilisation or sanitisation cycles in the first branch 3; and
- a second unit 12 containing a second sterile, disinfectant or medicinal fluid F2 leading into the first supply branch 3 and supplying the second fluid F2 independently of, and as an alternative for, the user fluid F from the supply line 1.

This embodiment, too, further comprises the control means 30 acting on at least one of the two units 9 and 12 (although both units might be controlled for added safety) so as to select the supply of the first or second fluid F1 or F2 according to the operating configuration of the dental equipment: that is to say, a continuous steady-state supply of the first branch 3 or sterilisation / disinfection cycles of the first branch 3.

More specifically, the second unit 12 is equipped with second control means 13 for enabling a continuous supply of the second fluid F2, when required, in the first branch 3.

As illustrated by the broken line in Figure 1, the second unit 12 for supplying the second fluid F2 may be connected directly to the first fluid supply branch 3.

Alternatively, the second unit 12 is connected to the above mentioned third independent supply branch 10 also leading into the first branch 3.

To enable a correct supply of fluids to the water circuit of the dental unit, the second means 13 for controlling and selecting the second unit 12 that supplies the second fluid F2 are synchronised with means 14 for supplying the user fluid F and with first means 11 for supplying the first disinfectant/sterilising fluid F1.

These control and selection means located on the different branches of the water circuit 1 may consist of valves for opening and closing the branches and controlled by a microprocessor system including the aforementioned control means 30 in order to perform programmed supply cycles of the different fluids used.

The unit 9 that supplies the first disinfectant/sterilising fluid F1 may essentially comprise the first container 15 for holding the first fluid F1 and the first means 16 for extracting the first fluid F1 and introducing it into the third branch 10.

The first extraction means 16 are of known type and may consist (purely by way of example) of a cap 16c connecting the first container 15 to the dental unit and a cannula 16a for extracting the first fluid F1.

The second unit 12 may comprise a second container 17 for holding the second fluid F2 consisting of a liquid mixed with a suitable product to produce a second sterile, disinfectant or medicinal fluid F2. The second container 17 is removably connected, through a stable fastening element (which in this case, too, may be a cap 18) equipped with second means 18a for extracting the second fluid mixture F2 and which, again, may be embodied as a cannula 18b.

Alternatively (see Figure 2), the second unit 12 may comprise a second container 17 for holding a sterile liquid and a third container 19 holding a disinfectant or medicinal product (in liquid, powder or granulated form) to be mixed with the sterile liquid by respective dosing means 20 acting between the second container 17 and the third container 19 in such a way as to supply in this case the third branch 10 with a second fluid F2 having properties suitable for the treatment to be carried out.

The third container 19 may also be connected using a cap 19a equipped with a cannula 19c for extracting the product.

In practice, the third container 19 is connected, through a respective conduit 21, to the branch 17a that supplies the second container 17 and where the aforementioned dosing means 20 are located, the latter comprising, by way of non-restricting example, a suction unit for drawing in the two products to produce the second fluid F2, said unit being adjustable according to the required dosage and, hence, of the properties the second fluid F2 is required to have.

The aforementioned second control and selection means 13 may be coordinated with the means 14 that supply the fluid F from the mains so as to allow the second container unit 12 to simultaneously introduce the second sterile, disinfectant or medicinal fluid F2 into the mains fluid F from the supply line 1 when operating conditions so require. As mentioned above, the control means 30, when the mains fluid supply 2 is deselected by the means 14, comprise a logical selection unit 31 (illustrated as a block) and connected to the first and second means 11 and 13 for selecting the first or second fluid supply F1 or F2 and to the mains fluid supply means 14, according to operating requirements.

In other words, if the structure used is of the simple first type, the logical unit 30, on reaching steady state condition, selects the continuous cycle from the first container 15 with the second sterile, disinfectant or medicinal fluid F2, or the sterilisation or sanitisation cycle with the first fluid F1.

In a second embodiment, with a more complex structure, the logical unit 30 may be programmed to make diversified choices, that is to say, continuously supplying the second fluid F2 to each single handpiece 4 selected, again with the mains fluid supply 2 deselected, or performing cycles of predetermined length and with predetermined quantities of the first fluid F1, by controlling the first and second selection means 11 and 13.

As regards the composition of the second fluid F2, this may be a liquid consisting of sterile water mixed with a disinfectant or medicinal product.

Alternatively, the liquid may be purified sterile water or a 0.1% physiological saline solution, again mixed with a disinfectant or medicinal product.

Another example composition for the second fluid F2 is hydrogen peroxide at final concentrations, when mixed with water, of between 0.1 to 3% to be introduced directly into the water circuit as a medicinal product.

The product to be mixed with the sterile liquid to form the second fluid F2 may consist of Chlorhexidine in quantities of between 0.002 and 0.2 as the final concentration, or Triclosan in quantities of between 0.005 and 0.5 as the final concentration.

The apparatus made as described above achieves the aforementioned aims thanks to its extremely simple structure made effective by the use of a traditional disinfection / sterilisation system or of a fluid with highly antiseptic or medicinal properties designed to maintain the sterility of the water circuit.

This choice, made by the dental surgeon according to needs, makes it possible to maintain the sterility of the user liquid during operation and creates in the water circuit an environment unfavourable for the growth of contaminating agents, thus blocking the formation of biofilm in the water circuit.

The disinfectant fluid can be used to create a spray that reduces the aero-dispersed bacterial charge since the spray droplets dispersed in the environment create a suitable concentration of disinfectant in the environment once the liquid has evaporated, thus acting more effectively on the bacterial charge dispersed in the environment.

All these properties contribute to improving the general hygiene of the working environment.

Another advantage is the possibility of applying a fluid with medicinal properties directly in the patient's mouth during a special treatment or a surgical operation, thus improving the quality of the treatment and providing immediate benefits for the patient.

It will be understood that the invention described may be useful in many industrial applications and may be modified and adapted in several ways without thereby departing from the scope of the invention as defined by the claims. Moreover, all the details of the invention may be substituted by technically equivalent elements.

## Claims

1. Method for sterilising and sanitising water circuits, especially the water circuits of dental units comprising the following steps of:
- supplying a user fluid (F) into a line (1) connected, at one end, to a mains water supply (2) and, at the other end, to the dental unit through a first branch (3) for supplying a series of devices comprising a plurality of handpieces (4);
- supplying a first disinfectant/sterilising fluid (F1) contained in a first unit (9) into a third independent branch (10) connected to the first unit (9) and into the first branch (3) connected to the third branch (10) to permit performance of programmable discontinuous sterilisation or sanitisation cycles in the first branch (3);
- supplying a second sterile disinfectant or medicinal fluid (F2) contained in a second unit (12) into the first branch (3) independently of, and as an alternative for, the user fluid (F) from the supply line (1);
the method being **characterised in that** it further comprises the step of
- selecting the supply of the first or of the second fluid (F1, F2) according to the operating configuration of the dental unit, that is to say, a continuous steady-state supply of the first branch (3) or sterilisation/disinfection cycles of the first branch (3) by control means (30) acting on at least one of the first and second units (9, 12).

2. Method according to claim 1, **characterised in that** further comprises the step of synchronising the step of supplying the second fluid (F2) with the step of supplying a user fluid (F) and with the step of supplying a first disinfectant/sterilising fluid (F1).

3. Method according to any of the foregoing claims, **characterised in that** the step of supplying a first disinfectant/sterilising fluid (F1) comprises the further step of extracting from a first container (15) said first fluid (F1).

4. Method according to any of the foregoing claims, **characterised in that** the step of supplying a second sterile disinfectant or medicinal fluid (F2) comprises the further step of extracting from a second container (17) said second fluid (F2).

5. Method according to any of the foregoing claims from 1 to 3, **characterised in that** the step of supplying a second sterile disinfectant or medicinal fluid (F2) comprises the further steps of: extracting from a second container (17) said second fluid (F2); extracting from a third container (19) a disinfectant or medicinal product; and mixing the second fluid (F2) with the disinfectant or medicinal product.

6. Method according to claim 5, **characterised in that** further comprising the step of dosing the disinfectant or medicinal product by dosing means (20) to supply at least the first branch (3) with a second fluid (F2) having properties suitable for the treatment to be carried out.

7. Method according to claim 5, **characterised in that** the disinfectant or medicinal product extracted from the third container (19) is in liquid form.

8. Method according to claim 5, **characterised in that** the disinfectant or medicinal product extracted from the third container (19) is in powder form.

9. Method according to claim 5, **characterised in that** the disinfectant or medicinal product extracted from the third container (19) is in granulated form.

10. Method according to claim 2, **characterised in that** the step of supply the fluid (F) comprises the further step of simultaneously introduce the second sterile, disinfectant or medicinal fluid (F2) into the mains fluid (F) from the supply line (1) .

11. Method according to claim 1, **characterised in that** the step of supplying the second fluid (F2) comprises the step of supplying at least a liquid consisting of sterile water mixed with a disinfectant or medicinal product.

12. Method according to claim 1, **characterised in that** the step of supplying the second fluid (F2) comprises the step of supplying at least a liquid consisting of purified sterile water mixed with a disinfectant or medicinal product.

13. Method according to claim 1, **characterised in that** the step of supplying the second fluid (F2) comprises the step of supplying at least a liquid consisting of a 0.1% physiological saline solution mixed with a disinfectant or medicinal product.

14. Method according to claim 1, **characterised in that** the step of supplying the second fluid (F2) comprises the step of supplying at least a liquid consisting of hydrogen peroxide at final concentrations, when mixed with water, of between 0.1 and 3%.

15. Method according to claim 1, **characterised in that** step of supplying the second fluid (F2) comprises the step of supplying a liquid consisting of a sterile liquid mixed with Chlorhexidine in quantities of between 0.002 and 0.2 as the final concentration.

16. Method according to claim 1, **characterised in that** the second fluid (F2) consists of a sterile liquid mixed with Triclosan in quantities of between 0.005 and 0.5 as the final concentration.

17. Method according to claim 1, **characterised in that** it comprises the step of detecting the second and the first fluid (F2, F1).

## Patentansprüche

1. Verfahren zur Sterilisation und Desinfektion von Wasserkreisläufen, insbesondere von Wasserkreisläufen in zahnärztlichen Einheiten, enthaltend die folgenden Phasen:
- Zuführen einer Verbraucherflüssigkeit (F) durch eine Leitung (1), angeschlossen mit einem Ende an ein Wassernetz (2) und mit dem anderen Ende an die zahnärztliche Einheit über eine erste Zweigleitung (3) zum Speisen einer Reihe von Vorrichtungen, enthaltend eine Anzahl von Handstücken (4);
- Zuführen einer ersten Desinfizier-/Sterilisierflüssigkeit (F1), enthalten in einer ersten Einheit (9), in eine unabhängige Zweigleitung (10), angeschlossen an die erste Einheit (9), und in die erste Zweigleitung (3), angeschlossen an die dritte Zweigleitung (10), um das Ausführen von programmierbaren unterbrochenen Sterilisier- oder Desinfizierzyklen in der ersten Zweigleitung (3) zu erlauben;
- Zuführen einer zweiten sterilen desinfizierenden oder medizinischen Flüssigkeit (F2), enthalten in einer zweiten Einheit (12), in die erste Zweigleitung (3), unabhängig von und als Alternative zu der Verbraucherflüssigkeit (F) der Zuführleitung (1);
wobei das Verfahren **dadurch gekennzeichnet ist, dass** es ausserdem die folgende Phase enthält:
- Wahl der Zuführung der ersten oder der zweiten Flüssigkeit (F1, F2), je nach der Betriebskonfiguration der zahnärztlichen Einheit, das heisst ein einkontinuierlicher Zuführzustand der ersten Zweigleitung (3) oder der Sterilisier-/Desinfizierzyklen der ersten Zweigleitung (3), durch Steuermittel (30), die auf wenigstens eine der ersten und zweiten Einheiten (9, 12) wirken.

2. Verfahren nach Patentanspruch 1, **dadurch gekennzeichnet, dass** es weiter die Phase der Synchronisierung der Zuführphase der zweiten Flüssigkeit (F2) mit der Zuführphase einer Verbraucherflüssigkeit (F) und mit der Zuführphase einer ersten Desinfizier-/Sterilisierflüssigkeit (F1) enthält.

3. Verfahren nach einem jeden der vorstehenden Patentansprüche, **dadurch gekennzeichnet, dass** die Phase des Zuführens einer ersten Desinfizier-/Sterilisierflüssigkeit (F1) die weitere Phase des Abziehens der genannten ersten Flüssigkeit (F1) aus einem ersten Behälter (15) enthält.

4. Verfahren nach einem jeden der vorstehenden Patentansprüche, **dadurch gekennzeichnet, dass** die Phase des Zuführens einer zweiten sterilen desinfizierenden oder medizinischen Flüssigkeit (F2) die weitere Phase des Abziehens der genannten zweiten Flüssigkeit (F2) aus einem zweiten Behälter (17) enthält.

5. Verfahren nach einem jeden der vorstehenden Patentansprüche von 1 bis 3, **dadurch gekennzeichnet, dass** die Phase des Zuführens zweiten sterilen desinfizierenden oder medizinischen Flüssigkeit (F2) die folgenden weiteren Phasen enthält: Abziehen der genannten zweiten Flüssigkeit (F2) aus einem zweiten Behälter (17); Abziehen eines desinfizierenden oder medizinischen Produktes aus einem dritten Behälter (19); und Mischen der zweiten Flüssigkeit (F2) mit dem desinfizierenden oder medizinischen Produkt.

6. Verfahren nach Patentanspruch 5, **dadurch gekennzeichnet, dass** es ausserdem die Phase des Dosierens des desinfizierenden oder medizinischen Produktes enthält, und zwar durch Dosiermittel (20), um wenigstens die erste Zweigleitung (3) mit einer zweiten Flüssigkeit (F2) zu speisen, welche die entsprechenden Eigenschaften für die durchzuführende Behandlung aufweist.

7. Verfahren nach Patentanspruch 5, **dadurch gekennzeichnet, dass** das aus dem dritten Behälter (19) abgezogene desinfizierende oder medizinische Produkt in flüssiger Form ist.

8. Verfahren nach Patentanspruch 5, **dadurch gekennzeichnet, dass** das aus dem dritten Behälter (19) abgezogene desinfizierende oder medizinische Produkt in Pulverform ist.

9. Verfahren nach Patentanspruch 5, **dadurch gekennzeichnet, dass** das aus dem dritten Behälter (19) abgezogene desinfizierende oder medizinische Produkt in Granulatform ist.

10. Verfahren nach Patentanspruch 2, **dadurch gekennzeichnet, dass** die Phase des Zuführens der Flüssigkeit (F) die weitere Phase des gleichzeitigen Eingebens der zweiten sterilen, desinfizierenden oder medizinischen Flüssigkeit (F2) in die Hauptflüssigkeit (F) aus der Zuführleitung (1) enthält.

11. Verfahren nach Patentanspruch 1, **dadurch gekennzeichnet, dass** die Phase des Zuführens der zweiten Flüssigkeit (F2) die Phase des Zuführens von wenigstens einer Flüssigkeit enthält, die aus sterilem Wasser besteht, vermischt mit einem desinfizierenden oder medizinischen Produkt.

12. Verfahren nach Patentanspruch 1, **dadurch gekennzeichnet, dass** die Phase des Zuführens der zweiten Flüssigkeit (F2) die Phase des Zuführens von wenigstens einer Flüssigkeit enthält, die aus gereinigtem sterilem Wasser besteht, vermischt mit einem desinfizierenden oder medizinischen Produkt.

13. Verfahren nach Patentanspruch 1, **dadurch gekennzeichnet, dass** die Phase des Zuführens der zweiten Flüssigkeit (F2) die Phase des Zuführens von wenigstens einer Flüssigkeit enthält, die aus einer 0,1%-igen physiologischen Salzlösung besteht, vermischt mit einem desinfizierenden oder medizinischen Produkt.

14. Verfahren nach Patentanspruch 1, **dadurch gekennzeichnet, dass** die Phase des Zuführens der zweiten Flüssigkeit (F2) die Phase des Zuführens von wenigstens einer Flüssigkeit enthält, die aus Wasserstoffperoxid in Endkonzentrationen zwischen 0,1 und 3% besteht, wenn sie mit Wasser vermischt ist.

15. Verfahren nach Patentanspruch 1, **dadurch gekennzeichnet, dass** die Phase des Zuführens der zweiten Flüssigkeit (F2) die Phase des Zuführens von wenigstens einer Flüssigkeit enthält, die aus einer sterilen Flüssigkeit besteht, vermischt mit Chlorhexidin in Mengen zwischen 0,002 und 0,2 als Endkonzentration.

16. Verfahren nach Patentanspruch 1, **dadurch gekennzeichnet, dass** die zweite Flüssigkeit (F2) aus einer sterilen Flüssigkeit besteht, vermischt mit Triclosan in Mengen zwischen 0,005 und 0,5 als Endkonzentration.

17. Verfahren nach Patentanspruch 1, **dadurch gekennzeichnet, dass** es die Phase des Erfassens der zweiten und der ersten Flüssigkeit (F2, F1) enthält.

## Revendications

1. Un procédé de stérilisation et d'aseptisation de circuits d'eau, notamment des circuits d'eau d'unités dentaires, comprenant les phases suivantes :
- alimentation d'un fluide d'utilisation (F) dans une ligne (1) reliée, à une extrémité, à une alimentation d'eau de réseau (2) et, à l'autre extrémité, à l'unité dentaire par l'intermédiaire d'une première branche (3) destinée à alimenter une série de dispositifs comprenant une pluralité de pièces à main (4) ;
- alimentation d'un premier fluide de désinfection / stérilisation (F1), contenu dans un premier groupe (9), dans une troisième branche (10) indépendante reliée audit premier groupe (9) et dans la première branche (3) reliée à ladite troisième branche (10) pour permettre l'exécution de cycles programmables discontinus de stérilisation ou d'aseptisation dans la première branche (3) elle-même ;
- alimentation d'un deuxième fluide stérile (F2) de désinfection ou médicamenteux, contenu dans un deuxième groupe (12), dans la première branche (3) indépendamment de et en alternative au fluide d'utilisation (F) provenant de la ligne d'alimentation (1) ;
ledit procédé étant **caractérisé en ce qu'**il comprend en outre la phase de
- sélection de l'alimentation du premier ou du deuxième fluide (F1, F2) en fonction de la configuration opérationnelle de l'unité dentaire, c'est-à-dire une alimentation continue en régime stationnaire de la première branche (3) ou des cycles de stérilisation / désinfection de la première branche (3) par l'intermédiaire de moyens de contrôle (30) agissant sur au moins l'un des premier et deuxième groupes (9, 12).

2. Le procédé selon la revendication 1, **caractérisé en ce qu'**il comprend en outre la phase de synchronisation de la phase d'alimentation du deuxième fluide (F2) avec la phase d'alimentation d'un fluide d'utilisation (F) et avec la phase d'alimentation d'un premier fluide de désinfection / stérilisation (F1).

3. Le procédé selon l'une quelconque des revendications précédentes, **caractérisé en ce que** la phase d'alimentation d'un premier fluide de désinfection / stérilisation (F1) comprend la phase supplémentaire consistant à extraire ledit premier fluide (F1) d'un premier récipient (15).

4. Le procédé selon l'une quelconque des revendications précédentes, **caractérisé en ce que** la phase d'alimentation d'un deuxième fluide stérile (F2) de désinfection ou médicamenteux comprend la phase supplémentaire consistant à extraire ledit deuxième fluide (F2) d'un deuxième récipient (17).

5. Le procédé selon l'une quelconque des revendications précédentes de 1 à 3, **caractérisé en ce que** la phase d'alimentation d'un deuxième fluide stérile (F2) de désinfection ou médicamenteux comprend les phases supplémentaires consistant à : extraire ledit deuxième fluide (F2) d'un deuxième récipient (17) ; à extraire un produit désinfectant ou médicamenteux d'un troisième récipient (19) ; et à mélanger le deuxième fluide (F2) avec le produit désinfectant ou médicamenteux.

6. Le procédé selon la revendication 5, **caractérisé en ce qu'**il comprend en outre la phase de dosage du produit désinfectant ou médicamenteux par l'intermédiaire de moyens de dosage (20) pour alimenter au moins la première branche (3) avec un deuxième fluide (F2) ayant des propriétés adaptées au traitement à effectuer.

7. Le procédé selon la revendication 5, **caractérisé en ce que** le produit désinfectant ou médicamenteux extrait du troisième récipient (19) est sous forme liquide.

8. Le procédé selon la revendication 5, **caractérisé en ce que** le produit désinfectant ou médicamenteux extrait du troisième récipient (19) est sous forme pulvérulente.

9. Le procédé selon la revendication 5, **caractérisé en ce que** le produit désinfectant ou médicamenteux extrait du troisième récipient (19) est sous forme granulaire.

10. Le procédé selon la revendication 2, **caractérisé en ce que** la phase d'alimentation du fluide (F) comprend la phase supplémentaire consistant à introduire en même temps le deuxième fluide stérile (F2) de désinfection ou médicamenteux dans le fluide de réseau (F) provenant de la ligne d'alimentation (1).

11. Le procédé selon la revendication 1, **caractérisé en ce que** la phase d'alimentation du deuxième fluide (F2) comprend la phase d'alimentation d'au moins un liquide consistant en de l'eau stérile mélangée avec un produit désinfectant ou médicamenteux.

12. Le procédé selon la revendication 1, **caractérisé en ce que** la phase d'alimentation du deuxième fluide (F2) comprend la phase d'alimentation d'au moins un liquide consistant en de l'eau stérile purifiée mélangée avec un produit désinfectant ou médicamenteux.

13. Le procédé selon la revendication 1, **caractérisé en ce que** la phase d'alimentation du deuxième fluide (F2) comprend la phase d'alimentation d'au moins un liquide consistant en une solution saline physiologique à 0,1 % mélangée avec un produit désinfectant ou médicamenteux.

14. Le procédé selon la revendication 1, **caractérisé en ce que** la phase d'alimentation du deuxième fluide (F2) comprend la phase d'alimentation d'au moins un liquide consistant en du peroxyde d'hydrogène à des concentrations finales, quand mélangé avec de l'eau, comprises entre 0,1 et 3 %.

15. Le procédé selon la revendication 1, **caractérisé en ce que** la phase d'alimentation du deuxième fluide (F2) comprend la phase d'alimentation d'un liquide consistant en un liquide stérile mélangé avec de la Chlorhexidine dans des quantités comprises entre 0,002 et 0,2 comme concentration finale.

16. Le procédé selon la revendication 1, **caractérisé en ce que** le deuxième fluide (F2) consiste en un liquide stérile mélangé avec du Triclosan dans des quantités comprises entre 0,005 et 0,5 comme concentration finale.

17. Le procédé selon la revendication 1, **caractérisé en ce qu'**il comprend la phase consistant à détecter le deuxième et le premier fluide (F2, F1).
